# EUROPEAN PATENT APPLICATION

(11) **EP 2 779 546 A1**
(43) Date of publication of application: **17.09.2014**
(21) Application number: 12874925.6
(22) Date of filing: 08.10.2012
(51) Int. Cl.: H04L 12/935

(54) **PORT SETTING METHOD, ROUTING DEVICE, AND COMPUTER PROGRAM PRODUCT**

(71) Applicant: Huawei Device Co., Ltd., Shenzhen, Guangdong 518129 (CN)
(72) Inventor: PENG, Bin, Shenzhen Guangdong 518129 (CN); WU, Guzheng, Shenzhen Guangdong 518129 (CN); LIU, Shengqiang, Shenzhen Guangdong 518129 (CN); XUE, Guiying, Shenzhen Guangdong 518129 (CN); YU, Jingjing, Shenzhen Guangdong 518129 (CN); ZHAO, Yang, Shenzhen Guangdong 518129 (CN)
(74) Representative: Goddar, Heinz J.
(86) International application number: PCT/CN2012/082572
(87) International publication number: WO 2014/056135

(57) **Abstract**

An embodiment of the present invention provides a port setting method, which includes: initiating a first detection message and a second detection message at the same time through a port, where the first detection message is used for detecting a first network server, and the second detection message is used for detecting a second network server; if at least one of a first response message to the first detection message and a second response message to the second detection message is received within a predetermined time, setting the working mode of the port to a wide area network WAN mode; otherwise, setting the working mode of the port to a local area network LAN mode. An embodiment of the present invention further provides a corresponding routing device and a corresponding computer program product. By means of the port setting method, routing device, and computer program product provided in the embodiments of the present invention, a routing device is capable of automatically setting the working mode of a port to a WAN mode or a LAN mode, and the process of setting the working mode of a port is simplified.

## Description

### TECHNICHAL FIELD

The present invention belongs to the field of communication network access, and in particular, to a port setting method, a routing device, and a computer program product

### BACKGROUND

A routing device usually includes Ethernet ports. Ethernet ports, based on the function, include a local area network (Local Area Network, LAN) port and a wide area network (Wide Area Network, WAN) port. A WAN port is used for accessing an external Ethernet, whereas a LAN port is used for connecting an access terminal, so that the access terminal is capable of accessing the external Ethernet via a routing device. A plurality of Ethernet ports exists in some routing devices, in which one port is a WAN port, and other Ethernet ports are LAN ports, and the LAN ports are physically separated from the WAN port. If a WAN port and a LAN port are mixed up in connecting a device and a network, the device is unable to work normally.

With the development of technologies, to meet the demands for small sizes and portability of routing devices, the number of Ethernet ports on a routing device is reduced, and in some routing devices only one Ethernet port exists, which is capable of working normally in a WAN mode or a LAN mode as a user sets the working mode of the Ethernet port through an application management interface. However, an application management interface of a routing device is required for a user to set the working mode of an Ethernet port, so the operations are very inconvenient.

### SUMMARY

Embodiments of the present invention provide a port setting method, a routing devices, and a computer program product, so as to solve the problem that is inconvenient to set the working mode of an Ethernet port.

In a first aspect, the present invention provides a port setting method, which includes:
initiating a first detection message and a second detection message at the same time through a port, where the first detection message is used for detecting a first network server, and the second detection message is used for detecting a second network server;
setting a working mode of the port to a wide area network WAN mode if at least one of a first response message to the first detection message and a second response message to the second detection message is received within a predetermined time; and
setting the working mode of the port to a local area network LAN mode if a first response message to the first detection message is not received within a predetermined time and a second response message to the second detection message is not received within a predetermined time.

In a first possible implementation manner of the first aspect of the present invention, the first detection message is a dynamic host configuration protocol DHCP discover message, the first response message is a DHCP offer message; the second detection message is a Point-to-Point Protocol over Ethernet PADI message, and the second response message is a PADO message.

In combination with the first possible implementation manner of the first aspect of the present invention, in a second possible implementation manner, the setting the working mode of the port to a wide area network WAN mode if at least one of a first response message to the first detection message and a second response message to the second detection message is received within a predetermined time is specifically:
if the PADO message is not received when the DHCP offer message is received within the predetermined time,
allocating an IP address in the DHCP offer message to the port according to the DHCP offer message, establishing a DHCP session with a DHCP server that sends the DHCP offer message, and setting the working mode of the port to a WAN mode; and
if the DHCP offer message is not received when the PADO message is received within the predetermined time,
according to the PADO message, establishing a PPPoE session with a PPPoE server that sends the PADO message, and setting the working mode of the port to a WAN mode.

In combination with the first possible implementation manner of the first aspect of the present invention, in a third possible implementation manner, the setting the working mode of the port to a wide area network WAN mode if at least one of a first response message to the first detection message and a second response message to the second detection message is received within a predetermined time is specifically:
if the DHCP offer message is not received when the PADO message is received within the predetermined time, keeping waiting; if the DHCP offer message is then received within the predetermined time, allocating an IP address in the DHCP offer message to the port according to the DHCP offer message, establishing a DHCP session with a DHCP server that sends the DHCP offer message, and setting the working mode of the port to a WAN mode; if the DHCP offer message is not received within the predetermined time, and according to the PADO message, establishing a PPPoE session with a PPPoE server that sends the PADO message, and setting the working mode of the port to a WAN mode; and
if the PADO message is not received when the DHCP offer message is received within the predetermined time,
allocating the IP address in the DHCP offer message to the port according to the DHCP offer message, establishing a DHCP session with a DHCP server that sends the DHCP offer message, and setting the working mode of the port to a WAN mode.

In a second aspect, the present invention provides another port setting method, which includes:
initiating a first detection message through a port, where the first detection message is used for detecting a first network server;
setting a working mode of the port to a wide area network WAN mode if a first response message to the first detection message is received within a first predetermined time;
initiating a second detection message through the port if a first response message to the first detection message is not received within a first predetermined time, where the second detection message is used for detecting a second network server;
setting the working mode of the port to a WAN mode if a second response message to the second detection message is received within a second predetermined time; and
setting the working mode of the port to a local area network LAN mode if a second response message to the second detection message is not received within a second predetermined time.

In a first possible implementation manner of the second aspect of the present invention, the first detection message is a dynamic host configuration protocol DHCP discover message, the first response message is a DHCP offer message; the second detection message is a Point-to-Point Protocol over Ethernet PADI message, and the second response message is a PADO message.

In combination with the first possible implementation manner of the second aspect of the present invention, in a second possible implementation manner, the setting the working mode of the port to a WAN mode if the DHCP offer message is received within the first predetermined time is specifically:
allocating an IP address in the DHCP offer message to the port, establishing a DHCP session with a DHCP server that sends the DHCP offer message, and setting the working mode of the port to a WAN mode; and
the setting the working mode of the port to a WAN mode if the PADO message is received within the second predetermined time is specifically:
   establishing a PPPoE session with a PPPoE server that sends the PADO message, and setting the working mode of the port to a WAN mode.

In a third aspect, the present invention provides a routing device, which includes a port, and further includes the following structures:
a third detection unit, configured to initiate a first detection message and a second detection message through the port at the same time, where the first detection message is used for detecting a first network server, and the second detection message is used for detecting a second network server;
a second WAN mode setting unit, configured to set a working mode of the port to a wide area network WAN mod if at least one of a first response message to the first detection message and a second response message to the second detection message is received within a predetermined time e;
a second LAN mode setting unit, configured to set the working mode of the port to a local area network LAN mode if a first response message to the first detection message is not received within a predetermined time and a second response message to the second detection message is not received within a predetermined time.

In a first possible implementation manner of the third aspect of the present invention, the first detection message is a dynamic host configuration protocol DHCP discover message, the first response message is a DHCP offer message; the second detection message is a Point-to-Point Protocol over Ethernet PADI message, and the second response message is a PADO message.

In combination with the first possible implementation manner of the third aspect of the present invention, in a second possible implementation manner, the second WAN mode setting unit is specifically configured to:
if the PADO message is not received when the DHCP offer message is received within the predetermined time,
allocate an IP address in the DHCP offer message to the port according to the DHCP offer message, establish a DHCP session with a DHCP server that sends the DHCP offer message, and set the working mode of the port to a WAN mode;
if the DHCP offer message is not received when the PADO message is received within the predetermined time,
according to the PADO message, establish a PPPoE session with a PPPoE server that sends the PADO message, and set the working mode of the port to a WAN mode.

In combination with the first possible implementation manner of the third aspect of the present invention, in a third possible implementation manner, the second WAN mode setting unit is specifically configured to:
if the DHCP offer message is not received when the PADO message is received within the predetermined time, keep waiting; if the DHCP offer message is then received within the predetermined time, allocate the IP address in the DHCP offer message to the port according to the DHCP offer message, establish a DHCP session with a DHCP server that sends the DHCP offer message, and set the working mode of the port to a WAN mode; and if the DHCP offer message is not received within the predetermined time, and according to the PADO message, establish a PPPoE session with a PPPoE server that sends the PADO message, and set the working mode of the port to a WAN mode; and
if the PADO message is not received when the DHCP offer message is received within the predetermined time,
allocate the IP address in the DHCP offer message to the port according to the DHCP offer message, establish a DHCP session with a DHCP server that sends the DHCP offer message, and set the working mode of the port to a WAN mode.

In a fourth aspect, the present invention provides yet another routing device, which includes a port, and further includes:
a first detection unit, configured to initiate a first detection message through the port, where the first detection message is used for detecting a first network server;
a first WAN mode setting unit, configured to set a working mode of the port to a wide area network WAN mode if a first response message to the first detection message is received within a first predetermined time;
a second detection unit, configured to initiate a second detection message through the port if a first response message to the first detection message is not received within a first predetermined time, where the second detection message is used for detecting a second network server;
where the first WAN mode setting unit is further configured to set the working mode of the port to a WAN mode if a second response message to the second detection message is received within a second predetermined time; and
a first LAN mode setting unit 504, configured to set the working mode of the port to a wide area network LAN mode if a second response message to the second detection message is not received within a second predetermined time.

In a first possible implementation manner of the fourth aspect of the present invention, the first detection unit is a dynamic host configuration protocol DHCP Client unit, the first detection message is a DHCP discover message, the first response message is a DHCP offer message; the second detection unit is a Point-to-Point Protocol over Ethernet PPPoE Client unit, the second detection message is a PADI message, and the second response message is a PADO message.

In combination with the first possible implementation manner of the fourth aspect of the present invention, in a second possible implementation manner, the first WAN mode setting unit is specifically configured to:
if the DHCP offer message is received within the first predetermined time, allocate an IP address in the DHCP offer message to the port, establish a DHCP session with a DHCP server that sends the DHCP offer message, and set the working mode of the port to a WAN mode;
if the PADO message is received within the second predetermined time, establish a PPPoE session with a PPPoE server that sends the PADO message, and set the working mode of the port to a WAN mode.

In a fifth aspect, the present invention provides yet another routing device, which includes:
a port;
a second processor, configured to initiate a first detection message and a second detection message at the same time through the port, where the first detection message is used for detecting a first network server, and the second detection message is used for detecting a second network server; set a working mode of the port to a WAN mode if at least one of a first response message to the first detection message and a second response message to the second detection message is received within a predetermined time; and set the working mode of the port to a LAN mode if the first response message to the first detection message is not received within the predetermined time and the second response message to the second detection message is not received within the predetermined time.

In a first possible implementation manner of the fifth aspect of the present invention, the first detection message is a dynamic host configuration protocol DHCP discover message, the first response message is a DHCP offer message; the second detection message is a Point-to-Point Protocol over Ethernet PADI message, and the second response message is a PADO message.

In combination with the first possible implementation manner of the fifth aspect of the present invention, in a second possible implementation manner, the second processor is specifically configured to:
if the PADO message is not received when the DHCP offer message is received within the predetermined time,
allocate an IP address in the DHCP offer message to the port according to the DHCP offer message, establish a DHCP session with a DHCP server that sends the DHCP offer message, and set the working mode of the port to a WAN mode;
if the DHCP offer message is not received when the PADO message is received within the predetermined time,
according to the PADO message, establish a PPPoE session with a PPPoE server that sends the PADO message, and set the working mode of the port to a WAN mode.

In combination with the first possible implementation manner of the fifth aspect of the present invention, in a third possible implementation manner, the second processor is specifically configured to:
if the DHCP offer message is not received when the PADO message is received within the predetermined time, keep waiting; if the DHCP offer message is then received within the predetermined time, allocate the IP address in the DHCP offer message to the port according to the DHCP offer message, establish a DHCP session with a DHCP server that sends the DHCP offer message, and set the working mode of the port to a WAN mode; and if the DHCP offer message is not received within the predetermined time, and according to the PADO message, establish a PPPoE session with a PPPoE server that sends the PADO message, and set the working mode of the port to a WAN mode; and
if the PADO message is not received when the DHCP offer message is received within the predetermined time,
allocate the IP address in the DHCP offer message to the port according to the DHCP offer message, establish a DHCP session with a DHCP server that sends the DHCP offer message, and set the working mode of the port to a WAN mode.

In a sixth aspect, the present invention provides yet another routing device, which includes:
a port;
a first processor, configured to initiate a first detection message through the port, where the first detection message is used for detecting a first network server; set a working mode of the port to a WAN mode if a first response message to the first detection message is received within a first predetermined time; initiate a second detection message through the port if the first response message to the first detection message is not received within the first predetermined time, where the second detection message is used for detecting a second network server, set the working mode of the port to a WAN mode if the second response message to the second detection message is received within the second predetermined time; and set the working mode of the port to a LAN mode if the second response message is not received within the second predetermined time.

In a first possible implementation manner of the sixth aspect of the present invention, the first detection message is a DHCP discover message, the first response message is a DHCP offer message; the second detection message is a PADI message, and the second response message is a PADO message.

In combination with the first possible implementation manner of the sixth aspect of the present invention, in a second possible implementation manner, the first processor is specifically configured to:
if the DHCP offer message is received within the first predetermined time, allocate an IP address in the DHCP offer message to the port, establish a DHCP session with a DHCP server that sends the DHCP offer message, and set the working mode of the port to a WAN mode; and
if the PADO message is received within the second predetermined time, establish a PPPoE session with a PPPoE server that sends the PADO message, and set the working mode of the port to a WAN mode.

In a seventh aspect, the present invention provides a computer program product, which includes a readable storage medium for use by a routing device, where a program code is stored in the readable storage medium, and the program code includes:
an instruction for initiating a first detection message and a second detection message at the same time through a port, where the first detection message is used for detecting a first network server, and the second detection message is used for detecting a second network server;
an instruction for setting a working mode of the port to a wide area network WAN mode if at least one of a first response message to the first detection message and a second response message to the second detection message is received within a predetermined time; and
an instruction for setting the working mode of the port to a local area network LAN mode if the first response message to the first detection message is not received within the predetermined time and the second response message to the second detection message is not received within the predetermined time.

In a first possible implementation manner of the seventh aspect of the present invention, the first detection message is a dynamic host configuration protocol DHCP discover message, the first response message is a DHCP offer message; the second detection message is a Point-to-Point Protocol over Ethernet PADI message, and the second response message is a PADO message.

In combination with the first possible implementation manner of the seventh aspect of the present invention, in a second possible implementation manner, the instruction for, if at least one of a first response message to the first detection message and a second response message to the second detection message is received within a predetermined time, setting the working mode of the port to a wide area network WAN mode is specifically:
an instruction for, if the PADO message is not received when the DHCP offer message is received within the predetermined time,
allocating an IP address in the DHCP offer message to the port according to the DHCP offer message, establishing a DHCP session with a DHCP server that sends the DHCP offer message, and setting the working mode of the port to a WAN mode; and
an instruction for, if the DHCP offer message is not received when the PADO message is received within the predetermined time,
according to the PADO message, establishing a PPPoE session with a PPPoE server that sends the PADO message, and setting the working mode of the port to a WAN mode.

In combination with the first possible implementation manner of the seventh aspect of the present invention, in a third possible implementation manner, the instruction for, if at least one of a first response message to the first detection message and a second response message to the second detection message is received within a predetermined time, setting the working mode of the port to a wide area network WAN mode is specifically:
an instruction for, if the DHCP offer message is not received when the PADO message is received within the predetermined time, keeping waiting; an instruction for, if the DHCP offer message is then received within the predetermined time, allocating the IP address in the DHCP offer message to the port according to the DHCP offer message, establishing a DHCP session with a DHCP server that sends the DHCP offer message, and setting the working mode of the port to a WAN mode; and an instruction for, if the DHCP offer message is not received within the predetermined time, and according to the PADO message, establishing a PPPoE session with a PPPoE server that sends the PADO message, and setting the working mode of the port to a WAN mode;
an instruction for, if the PADO message is not received when the DHCP offer message is received within the predetermined time,
allocating the IP address in the DHCP offer message to the port according to the DHCP offer message, establishing a DHCP session with a DHCP server that sends the DHCP offer message, and setting the working mode of the port to a WAN mode.

In an eighth aspect, the present invention provides yet another computer program product, which includes a readable storage medium for use by a routing device, where a program code is stored in the readable storage medium, and the program code includes:
an instruction for initiating a first detection message through a port, where the first detection message is used for detecting a first network server;
an instruction for setting a working mode of the port to a wide area network WAN mode if a first response message to the first detection message is received within a first predetermined time;
an instruction for initiating a second detection message through the port if the first response message to the first detection message is not received within the first predetermined time, where the second detection message is used for detecting a second network server;
an instruction for setting the working mode of the port to a WAN mode if a second response message to the second detection message is received within a second predetermined time; and
an instruction for setting the working mode of the port to a local area network LAN mode if the second response message to the second detection message is not received within the second predetermined time.

In a first possible implementation manner of the eighth aspect of the present invention, the first detection message is a dynamic host configuration protocol DHCP discover message, the first response message is a DHCP offer message; the second detection message is a Point-to-Point Protocol over Ethernet PADI message, and the second response message is a PADO message.

In combination with the first possible implementation manner of the eighth aspect of the present invention, in a second possible implementation manner, the instruction for setting the working mode of the port to a WAN mode if the DHCP offer message is received within the first predetermined time is specifically:
an instruction for allocating the IP address in the DHCP offer message to the port, establishing a DHCP session with a DHCP server that sends the DHCP offer message, and setting the working mode of the port to a WAN mode; and
the instruction for setting the working mode of the port to a WAN mode if the PADO message is received within the second predetermined time is specifically:
   an instruction for establishing a PPPoE session with a PPPoE server that sends the PADO message, and setting the working mode of the port to a WAN mode.

Through the implementation of the embodiments of the present invention, a routing device is capable of detecting, through a detection message, whether the other end of a port is connected to a network server, automatically setting the working mode of the port to a WAN mode or a LAN mode accordingly, and works normally, and because a user is not required to perform the setting, the process of setting the working mode of a port is simplified.

### BRIEF DESCRIPTION OF DRAWINGS

FIG. 1 is a schematic view of a routing system disclosed in an embodiment of the present invention;
FIG. 2 is a schematic view of another routing system disclosed in an embodiment of the present invention;
FIG. 3 is a schematic flow chart of a port setting method disclosed in an embodiment of the present invention;
FIG. 4 is a schematic flow chart of another port setting method disclosed in an embodiment of the present invention;
FIG. 5 is a schematic flow chart of another port setting method disclosed in an embodiment of the present invention;
FIG. 6 is a schematic view of an application scenario of a routing device disclosed in an embodiment of the present invention;
FIG 7 is a schematic structural view of a routing device disclosed in an embodiment of the present invention;
FIG 8 is a schematic structural view of another routing device disclosed in an embodiment of the present invention;
FIG 9 is a schematic structural view of another routing device disclosed in an embodiment of the present invention;
FIG 10 is a schematic structural view of another routing device disclosed in an embodiment of the present invention;
FIG 11 is a schematic structural view of another routing device disclosed in an embodiment of the present invention; and
FIG. 12 is a schematic structural view of another routing device disclosed in an embodiment of the present invention.

### DESCRIPTION OF EMBODIMENTS

The make the objectives, technical solutions, and advantages of the embodiments of the present invention more comprehensible, the following further describes the specific embodiments of the present invention in detail with reference to the accompanying drawings. Apparently, the described embodiments are a part rather than all of the embodiments of the present invention. All other embodiments obtained by persons of ordinary skill in the art based on the embodiment of the present invention without creative efforts shall fall within the protection scope of the present invention.

First, it should be noted that a routing device described in the embodiments of the present invention includes, but is not limited to, a terminal device such as a wired router, a wireless router, a mobile Wireless-Fidelity (Wireless-Fidelity, Wi-Fi) device.

A routing device in the embodiments of the present invention includes a network port. The port may be set to a WAN mode to implement the function of a WAN port and is also may be set to a LAN mode to implement the function of a LAN port. For example, the network port may be an RJ45 port, or may also be other ports capable of implementing WAN access or LAN access.

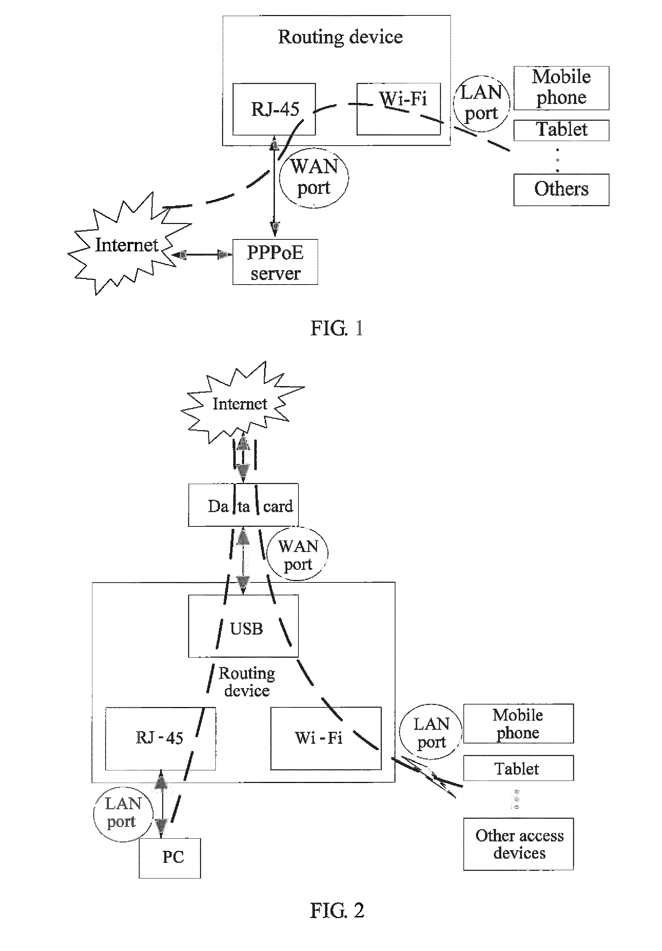

Specifically, the system architecture in which the port of a routing device works in a WAN mode is shown in FIG. 1. In one aspect, the routing device uses an RJ45 port as a WAN port and is connected to a Point-to-Point Protocol over Ethernet (Point-to-Point Protocol over Ethernet, PPPoE) server through the RJ45 port, accesses the Internet through the PPPoE server, and establishes an uplink data channel. In another aspect, Wi-Fi is used as a LAN port to provide a downlink data channel for other access devices such as a mobile phone and a tablet computer, so as to implement the routing function.

The system architecture in which the port of a routing device works in a LAN mode is shown in FIG. 2. In one aspect, a routing device uses an RJ45 port as a LAN port and is connected to a PC device through the RJ45 port or may also be connected to other access devices through Wi-Fi. In another aspect, a routing device is connected to a data card through a USB and is connected to the Internet through the data card, so as to establish an uplink data channel to enable a PC device and other access devices connected through the RJ45 port to access the Internet.

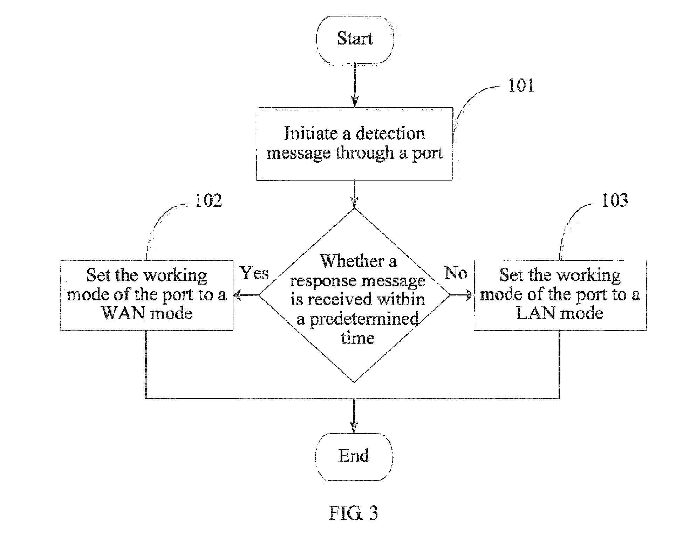

Referring to FIG. 3, an embodiment of the present invention provides a port setting method, which includes the following steps:
Step 101: Initiate a detection message through a port.

The detection message is used for detecting a network server.

Step 102: If a response message to the detection message is received within a predetermined time, set the working mode of the port to a WAN mode.

Step 103: If the response message to the detection message is not received within the predetermined time, set the working mode of the port to a LAN mode.

Specifically, when the port of a routing device is connected to a device or a network through a cable or in other manners, or when a routing device is powered on or restarted, step 101 is triggered. The routing device initiates a detection message through the port, and the detection message is used for detecting whether the other end of the port is connected to a network server for the routing device to access a wide area Ethernet. Within a predetermined time, a routing device is capable of sending a detection message a plurality of times to prevent a failure of sending a detection message due to packet loss, undesirable network conditions, and the like. The predetermined time starts when the routing device initiates a detection message, which may be preset in a routing device by a manufacturer or may also be set during the subsequent use of a routing device.

If the device or network connected to the port returns a response message to the routing device, and the routing device receives the response message within a predetermined time (for example, 15s), it may be regarded that the device connected to the routing device is a network server, or a network server exists in a network connected to the routing device, so that the routing device is capable of accessing a wide area network through the network server. The routing device sets the working mode of the port to a WAN mode according to the response message, so that the routing device is capable of accessing a wide area Ethernet through the port that works in the WAN mode. Specifically, when the working mode of the port is set, the working mode of the port keeps unchanged if the current working mode of the port is a WAN mode; and the working mode of the port is set to a WAN mode again if the current working mode of the port is a LAN mode.

If the routing device does not receive a response message to the detection message within a predetermined time, it may be regarded that a network server for the routing device to access a wide area Ethernet does not exist at the other end of the port, and the device connected to the port is another access device that has not accessed the network, such as a PC and a hub. The routing device sets the working mode of the port to a LAN mode and is capable of accessing a wide area Ethernet through other ports such as a USB, a wireless network port or other physical ports, so that other access devices are capable of accessing the wide area Ethernet through the port that works in a LAN mode. Specifically, when the working mode of the port is set, the working mode of the port keeps unchanged if the current working mode of the port is a LAN mode; and the working mode of the port is set to a WAN mode again if the current working mode of the port is a LAN mode.

Optionally, the detection message is a dynamic host configuration protocol (Dynamic host configuration protocol, DHCP) discover message, and the response message to the detection message is a DHCP offer message. After the DHCP discover message is initiated, if the routing device receives the DHCP offer message within a predetermined time, it may be regarded that the other end of the port is connected to a DHCP server, and the DHCP server is mainly used for allocating a dynamic IP address to a local area network access device, so that the access device is capable of accessing the wide area Ethernet. The DHCP server may be embedded in another routing device having the function of a DHCP server.

In the embodiment of the present invention, the routing device is capable of detecting, through a DHCP discover message, whether a DHCP server exists at the other end of the port, and if a DHCP offer message is received within a predetermined time, it is regarded that the other end of the port is connected to a DHCP server, and the working mode of the port is set to a WAN mode, so that the routing device is capable of accessing a wide area Ethernet through the port that works in a WAN mode. If a DHCP offer message is not received within a predetermined time, it is regarded that the other end of the port is not connected to a DHCP server, and the working mode of the port is set to a LAN mode. Through the foregoing solution, the routing device is capable of automatically setting the working mode of the port to a WAN mode or a LAN mode, and works normally, and because a user is not required to perform the setting, the process of setting the working mode of a port is simplified.

Optionally, the detection message is a Point-to-Point Protocol over Ethernet Active Discovery Initiation (PPPoE Active Discovery Initiation, PADI) message, and the response message to the detection message is a Point-to-Point Protocol over Ethernet Active Discovery Initiation Point-to-Point Protocol over Ethernet Active Discover Offer (PPPoE Active Discovery Offer, PADO) message. After the PADI message is initiated, if the routing device receives a PADO message within a predetermined time, it may be regarded that the other end of the port is connected to a PPPoE server, and the PPPoE server mainly receives a PPPoE dial-up request of a local area network access device, so as to implement the dial-up access of the local area network access device. The PPPoE server may also be embedded in one modem having the function of a PPPoE server or may also be embedded in another routing device having the function of a PPPoE server. After receiving the PADO message, the routing device is capable of performing a series of information exchanges with the PPPoE server, so as to complete a PPPoE dial-up access process and access a wide area network.

In the embodiment of the present invention, the routing device is capable of detecting, through a PADI message, whether a PPPoE server exists at the other end of the port, if a PADO message is received within a predetermined time, it may be regarded that the other end of the port is connected to a PPPoE server, and the working mode of the port is set to a WAN mode, so that the routing device is capable of accessing a wide area Ethernet through the port that works in a WAN mode. If a PADO message is not received within a predetermined time, it may be regarded that the other end of the port is not connected to a PPPoE server, and the working mode of the port is set to a LAN mode. Through the foregoing solution, the routing device is capable of automatically setting the working mode of the port to a WAN mode or a LAN mode, and works normally, and because a user is not required to perform the setting, the process of setting the working mode of a port is simplified.

It should also be noted that, in all embodiments of the present invention, the setting of a port may be the setting on a physical structure or may also include the setting on logic, a parameter or software. The working states of a port in a WAN mode and a LAN mode and the specific process of switching between a WAN mode and a LAN mode are illustrated in the following:

When a port works in a WAN mode, a DHCP Client module (or a PPPoE Client module) in a routing device obtains an IP address from a DHCP server (or a PPPoE server) connected at the other end of the port, respectively, and configures the IP address to a virtual interface. At the same time, the routing device obtains a gateway address through the port and adds the gateway address as a default route for the routing device, so that the routing device is capable of accessing a DHCP server through the IP address and the gateway address, and establishes a DHCP session thereto, or establishes a PPPoE session through a PPPoE server, so as to access a WAN.

When the port works in a LAN mode, the port is capable of working as one separate interface or also working as one port of a bridge. Here, the routing device obtains a gateway address (for example, 192.168.8.1, 255.255.255.0) preconfigured by the routing device itself, allocates the gateway address to the port, or to the bridge. Here, the access device on the LAN side is capable of accessing the port and the routing device through the gateway address.

When the port is switched from a WAN mode to a LAN mode, the working state of the port in a WAN mode is first cleared. The IP address of the port working as a WAN port is cleared, and the default route based on the port saved in the routing device is cleared. In the routing device, a network process corresponding to the DHCPC module or a session process corresponding to the PPPC module stops. After the WAN state has been cleared, the routing device obtains a gateway address preconfigured by the routing device itself, and configures the gateway address on the port or the bridge, so as to complete the configuration of a LAN state. Here, the access device on the LAN side is capable of accessing the port and the routing device through the gateway address.

When the port is switched from a LAN mode to a WAN mode, the working state of the port in a LAN mode is first cleared. The IP address allocated to the port is cleared, or if the port has been added to the bridge, the port is detached from the bridge. In addition, the IP address obtained from the DHCP server or the PPPoE server is allocated to the port, and the obtained gateway address is allocated as the default route of the routing device.

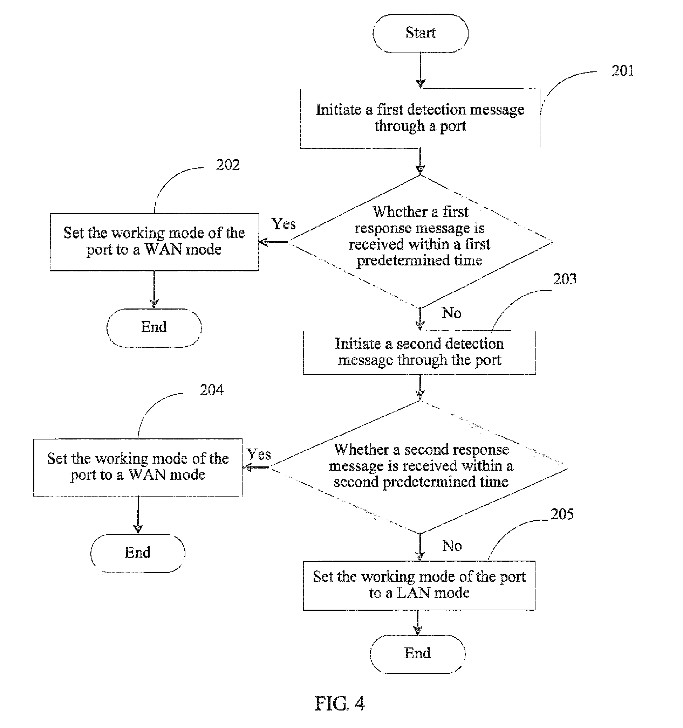

Referring to FIG. 4, an embodiment of the present invention further provides another port setting method, which includes the following steps:
Step 201: Initiate a first detection message through a port.
Step 202: If a first response message to the first detection message is received within a first predetermined time, set the working mode of the port to a WAN mode.
Step 203: If the first response message to the first detection message is not received within the first predetermined time, initiate a second detection message through the port.
Step 204: If a second response message to the second detection message is received within a second predetermined time, set the working mode of the port to a WAN mode.
Step 205: If the second response message to the second detection message is not received within the second predetermined time, set the working mode of the port to a LAN mode.

Specifically, when the port of the routing device is connected to a device or a network through a cable or in other manners, or when the routing device is powered on or restarted, step 201 is triggered.

Optionally, the first detection message may be a DHCP discover message, the first response message may be a DHCP offer message, the second detection message may be a PADI message, and the second response message may be a PADO message. Optionally, the routing device is capable of sending the first and second detection messages a plurality of times, so as to prevent a failure of sending the first and second detection messages due to packet loss, undesirable network conditions, and the like. In this embodiment, the routing device first initiates a DHCP discover message through a port, so as to detect whether the other end of the port of the routing device is connected to a DHCP server; and if a DHCP offer message is received within a first predetermined time (such as 15s or 10s), it indicates that the other end of the port is connected to a DHCP server, and the DHCP server may be embedded in another routing device having the function of a DHCP server. If the DHCP offer message is not received within the first predetermined time, the routing device initiates a PADI message to detect whether the other end of the port of the routing device is connected to a PPPoE server; if a PADO message is received within a second predetermined time (such as 15s or 10s), it indicates that the other end of the port is connected to a PPPoE server; and if the PADO message is not received within the second predetermined time, it is regarded that the other end of the port is not connected to a PPPoE server and is not connected to a DHCP server either, so the working mode of the port is set to a LAN mode. The first predetermined time starts when the routing device initiates the first detection message, and the second predetermined time starts when the routing device initiates the second detection message, which may be preset in a routing device by a manufacturer or may be set during the subsequent use of the routing device. In the embodiment of the present invention, the routing device first detects whether an HCP server exists at the other end of the port through a DHCP discover message. If a DHCP offer message is received within a first predetermined time, it may be regarded that the other end of the port is connected to a DHCP server, the working mode of the port is set to a WAN mode, and the IP address in the DHCP offer is allocated to the port, so that the routing device is capable of accessing a wide area Ethernet through the port that works in a WAN mode. If the DHCP offer message is not received within the first predetermined time, it is further detected whether a PPPoE server exists at the other end of the port through a PADI message. If a PADO message is received within a second predetermined time, it may be regarded that the other end of the port is connected to a PPPoE server, the working mode of the port is set to a WAN mode, a PPPoE session is established in response to the PADO message, and a PPPoE dial-up connection request is initiated to the PPPoE server, so that the routing device is capable of accessing a wide area Ethernet through the port that works in a WAN mode. If the PADO message is not received within the second predetermined time, it may be regarded that the other end of the port is not connected to a PPPoE server or a DHCP server, and the working mode of the port is set to a LAN mode. It should be noted that, the working mode of the port may be set immediately after the DHCP offer message or PADO message is received or may also be set after the first predetermined time and the second predetermined time have ended, which is not limited in all embodiments of the present invention. Through the foregoing solution, the routing device is capable of automatically setting the working mode of the port to a WAN mode or a LAN mode, and works normally, and because a user is not required to perform the setting, the process of setting the working mode of a port is simplified.

Optionally, in this embodiment, the routing device may also detect, through a PADI message, whether a PPPoE server exists at the other end of the port, and if it is regarded that a PPPoE server is not provided, further detect, through a DHCP discover message, whether an HCP server exists at the other end of the port, which is also capable to achieve the beneficial effect of simplifying the process of setting the working mode of a port.

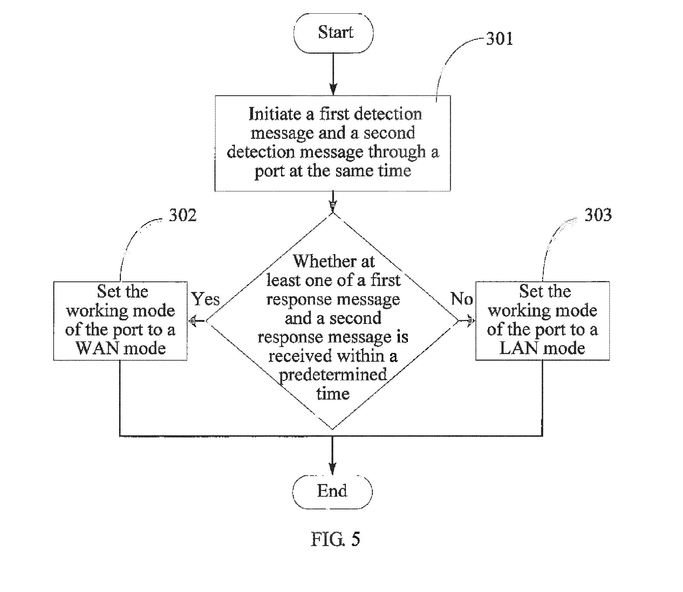

Referring to FIG. 5, in yet another embodiment of the present invention, the routing device may also initiate a first detection message and a second detection message at the same time, and the specific process is as follows:
Step 301: Initiate a first detection message and a second detection message at the same time through a port.

The first detection message is used for detecting a first network server, and the second detection message is used for detecting a second network server.

Step 302: If at least one of a first response message to the first detection message and a second response message to the second detection message is received within a predetermined time, set the working mode of the port to a WAN mode.

Step 303: If the first response message to the first detection message is not received within a first predetermined time, and the second response message to the second detection message is not received within a second predetermined time, set the working mode of the port to a LAN mode.

Specifically, when the port of the routing device is connected to a device or a network through a cable or in other manners or the routing device is powered on or restarted, step 301 is triggered.

Specifically, the first detection message may be a DHCP discover message, the first response message may be a DHCP offer message; the second detection message may be a PADI message, and the second response message may be a PADO message. The specific information exchange process and determination principles may be referred to other embodiments, which are longer described here.

In the embodiment of the present invention, the first predetermined time starts when the routing device initiates a first detection message, and the second predetermined time starts when the routing device initiates a second detection message, which may be the same predetermined time, may be preset in a routing device by a manufacturer or may also be set during the subsequent use of the routing device. The routing device may initiate a DHCP discover message and a PADI message through a port at the same time, or may also initiate a DHCP discover message and a PADI message in a sequence through the port, in which if the DHCP discover message is initiated first, the time interval between the initiation of the PADI message and the initiation of the DHCP discover message is shorter than the first predetermined time; and if a PADI message is initiated first, the time interval between the initiation of the DHCP discover message and the initiation of the PADI message is shorter than the second predetermined time.

Optionally, if the PADO message is not received when the DHCP offer message is received within the first predetermined time, the routing device allocates the IP address in the DHCP offer message to the port according to the DHCP offer message, establishes a DHCP session with a DHCP server that sends the DHCP offer message, and sets the working mode of the port to a WAN mode; if the DHCP offer message is not received when the PADO message is received within the second predetermined time, and according to the PADO message, the routing device establishes a PPPoE session with a PPPoE server that sends the PADO message, and sets the working mode of the port to a WAN mode.

If the routing device receives neither the DHCP offer message nor the PADO message, set the working mode of the port to a LAN mode. Through the foregoing solution, the time delay for detecting a server at another side of a port may be received, so as to complete the setting of the working mode of the port more rapidly.

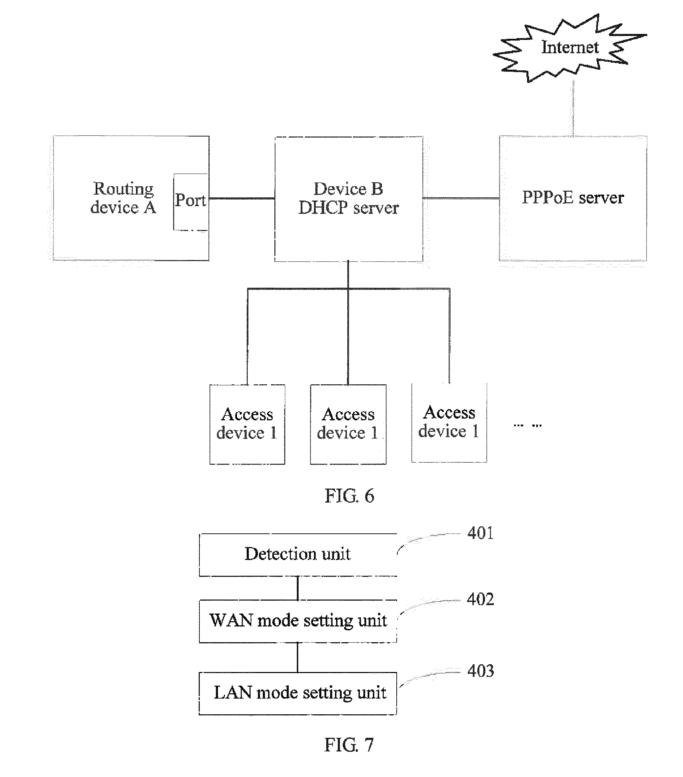

In the above solution, in some application scenarios, the routing device might receive both the DHCP offer message and the PADI message, the system architecture of the application scenario is shown in FIG. 6: a routing device A is connected to a device B set with a DHCP server through a port, the device B is connected to a network set with a PPPoE server, and the device B is further connected to other access devices, in which the device B establishes a PPoE connection with the PPPoE server and accesses a wide area network, and other access device access the wide area network through the device B. In such an application scenario, when the routing device A initiates a DHCP discover message and a PADI message, both a DHCP server and a PPPoE server are provided in the network that the routing device A accesses through a port, the routing device A, after step 301 is performed, might receive both the DHCP offer message and the PADO message because of network interconnectivity. For example, the routing device A sends a PPPoE dial-up request to the PPPoE server in response to the PADO message, so that as a PPPoE connection is established between the device B and the PPPoE server, the PPPoE connection between the device B and the PPPoE server might become unstable. In such an application scenario, the routing device A is expected to be capable of establishing a connection with the DHCP server and allocating the IP address allocated by the DHCP server to the port. Therefore, optionally, in the embodiment of the present invention, the priority may be to make response to the DHCP discover message and configure a port parameter according to the DHCP discover message, which is specifically as follows:

If the DHCP offer message is not received when the PADO message is received within a second predetermined time, keep waiting; if the DHCP offer message is then received within the first predetermined time, allocate the IP address in the DHCP offer message to the port according to the DHCP offer message, establish a DHCP session with a DHCP server that sends the DHCP offer message, and set the working mode of the port to a WAN mode; and if the DHCP offer message is not received within the first predetermined time, and according to the PADO message, establish a PPPoE session with a PPPoE server that sends the PADO message, and set the working mode of the port to a WAN mode.

If the PADO message is not received when a DHCP offer message is received within a first predetermined time,
allocate the IP address in the DHCP offer message to the port according to the DHCP offer message, establish a DHCP session with a DHCP server that sends the DHCP offer message, set the working mode of the port to a WAN mode, and if subsequently the PADO message is received, make no response to the PADO message.

By executing this embodiment, the routing device may be connected to a DHCP server normally and rapidly in the application scenario shown in FIG. 6, and the connection between a DHCP server device and a PPPoE server is kept stable.

It should be noted that, in the embodiments of the present invention, the detection messages, namely, the first detection message and the second detection message are not limited to a DHCP discover message and a PADI message, and instead a network message, as long as may be used for detecting a server on a wide area network side, may be used in the present invention. In the embodiment of the present invention, the DHCP discover message and the PADI message are only taken as an example for illustration, which does not constitute a limitation on the present invention.

Referring to FIG. 7, an embodiment of the present invention further provides a routing device, which includes a port, and further includes the following structures:
a detection unit 401, configured to initiate a detection message through the port;
where the detection message is used for detecting a network server;
a WAN mode setting unit 402, configured to set a working mode of the port to a WAN mode if a response message to the detection message is received within a predetermined time; and
a LAN mode setting unit 403, configured to set the working mode of the port to a LAN mode if a response message to the detection message is not received within a predetermined time.

Specifically, when the port of the routing device is connected to a device or a network through a cable or in other manners or the routing device is powered on or restarted, a detection unit 401 is triggered to initiate detection information. The detection unit 401 initiates a detection message through the port, and the detection message is used for detecting whether the other end of the port is connected to a network server for the routing device to access a wide area Ethernet. Within a predetermined time, the detection unit 401 is capable of sending the detection message a plurality of times, so as to prevent a failure of sending a detection message due to packet loss or undesirable network conditions. The predetermined time starts when the routing device initiates a detection message, which may be preset in a routing device by a manufacturer or may also be set during the subsequent use of the routing device.

If the device or network connected to the port returns a response message to the routing device and the routing device receives the response message within a predetermined time (for example, 15s), it may be regarded that the device connected to the routing device is a network server or a network server exists in a network connected to the routing device, so that the routing device is capable of accessing a wide area network through the network server. The WAN mode setting unit 402 sets the working mode of the port to a WAN mode according to the response message, so as to enable the routing device to access a wide area Ethernet through the port that works in a WAN mode. Specifically, when the working mode of the port is set, the working mode of the port keeps unchanged if the current working mode of the port is a WAN mode; and the working mode of the port is set to a WAN mode again if the current working mode of the port is a LAN mode.

If the routing device does not receive a response message to the detection message within the predetermined time, it may be regarded that a network server for the routing device to access a wide area Ethernet does not exist at the other end of the port, and the device connected to the port is one of other access devices such as a PC and a hub that has not accessed the network yet. The LAN mode setting unit 403 sets the working mode of the port to a LAN mode, and accesses a wide area Ethernet through other ports, such as a USB, wireless network port or other physical ports, so that other access devices are capable of accessing a wide area Ethernet through the port that works in a LAN mode. Specifically, when the working mode of the port is set the working mode of the port keeps unchanged if the current working mode of the port is a LAN mode; and the working mode of the port is set to a WAN mode again if the current working mode of the port is a LAN mode.

Optionally, the detection unit 401 is a DHCP client unit, the detection message is a DHCP discover message, and the response message to the detection message is a DHCP offer message. After the DHCP discover message is initiated, if the routing device receives a DHCP offer message within a predetermined time, it may be regarded that the other end of the port is connected to a DHCP server, and the DHCP server is mainly used for allocating a dynamic IP address to a local area network access device, so that the access device is capable of accessing a wide area Ethernet. The DHCP server may be embedded in another routing device having the function of a DHCP server.

In the embodiment of the present invention, the routing device is capable of detecting, through a DHCP discover message, whether a DHCP server exists at the other end of the port, and if a DHCP offer message is received within a predetermined time, it is regarded that the other end of the port is connected to a DHCP server, and the working mode of the port is set to a WAN mode, so that the routing device is capable of accessing a wide area Ethernet through the port that works in a WAN mode. If a DHCP offer message is not received within a predetermined time, it is regarded that the other end of the port is not connected to a DHCP server, and the working mode of the port is set to a LAN mode. Through the foregoing solution, the routing device is capable of automatically setting the working mode of the port to a WAN mode or a LAN mode, and works normally, and because a user is not required to perform the setting, the process of setting the working mode of a port is simplified.

Optionally, the detection unit 401 is a PPPoE client unit, the detection message is a PADI message, and the response message to the detection message is a PADO message. After the PADI message is initiated, if the routing device receives a PADO message within a predetermined time, it may be regarded that the other end of the port is connected to a PPPoE server, and the PPPoE server mainly receives a PPPoE dial-up request of a local area network access device, so as to implement the dial-up access of the local area network access device. The PPPoE server may be embedded in one modem having the function of a PPPoE server, or may also be embedded in another routing device having the function of a PPPoE server. After receiving the PADO message, the routing device is capable of performing a series of information exchanges with the PPPoE server, so as to complete a PPPoE dial-up access process and access a wide area network.

In the embodiment of the present invention, the routing device is capable of detecting, through a PADI message, whether a PPPoE server exists at the other end of the port, and if a PADO message is received within a predetermined time, it may be regarded that the other end of the port is connected to a PPPoE server, the working mode of the port is set to a WAN mode, and a PPPoE dial-up connection request is initiated to the PPPoE server, so that the routing device is capable of accessing a wide area Ethernet through the port that works in a WAN mode. If the PADO message is not received within the predetermined time, it may be regarded that the other end of the port is not connected to a PPPoE server, and the working mode of the port is set to a LAN mode. Through the foregoing solution, the routing device is capable of automatically setting the working mode of the port to a WAN mode or a LAN mode, and works normally, and because a user is not required to perform the setting, the process of setting the working mode of a port is simplified.

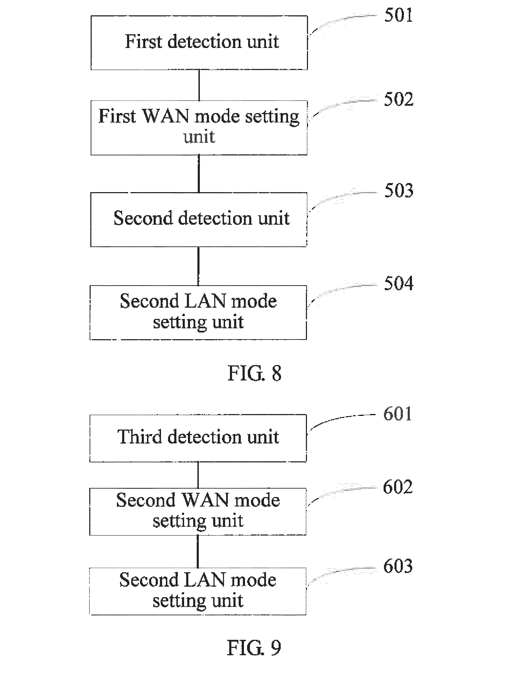

Referring to FIG. 8, an embodiment of the present invention further provides another routing device, which includes a port, and further includes the following structures:
a first detection unit 501, configured to initiate a first detection message through the port, where the first detection message is used for detecting a first network server;
a first WAN mode setting unit 502, configured to set a working mode of the port to a WAN mode if a first response message to the first detection message is received within a first predetermined time;
a second detection unit 503, configured to initiate a second detection message through the port if a first response message to the first detection message is not received within a first predetermined time, where the second detection message is used for detecting a second network server;
a first WAN mode setting unit 502, further configured to set the working mode of the port to a WAN mode if a second response message to the second detection message is received within a second predetermined time; and
a first LAN mode setting unit 504, configured to set the working mode of the port to a LAN mode if a second response message to the second detection message is not received within a second predetermined time.

Specifically, when the port of the routing device is connected to a device or a network through a cable or in other manners or the routing device is powered on or restarted, the first detection unit 501 is triggered to initiate a first detection message through the port.

Optionally, the first detection unit 501 may be a DHCP client unit, the first detection message may be a DHCP discover message, the first response message may be a DHCP offer message, and the second detection unit 503 may be a PPPoE client unit, the second detection message may be a PADI message, and the second response message may be a PADO message. The first detection unit 501 and the second detection unit 503 are capable of sending the first and second detection messages a plurality of times, so as to prevent a failure of sending the first and second detection messages due to packet loss, undesirable network conditions, and the like. In this embodiment, the DHCP client unit first initiates a DHCP discover message through a port, so as to detect whether the other end of the port of the routing device is connected to a DHCP server; and if a DHCP offer message is received within a first predetermined time (such as 15s or 10s), it indicates that the other end of the port is connected to a DHCP server, and the DHCP server may be embedded in another routing device having the function of a DHCP server. If the DHCP offer message is not received within the first predetermined time, the PPPoE client unit initiates a PADI message to detect whether the other end of the port of the routing device is connected to a PPPoE server, and if a PADO message is received within a second predetermined time (such as 15s or 10s), it indicates that the other end of the port connected to a PPPoE server; and if the PADO message is not received within the second predetermined time, it is regarded that the other end of the port is not connected to a PPPoE server, and is not connected to a DHCP server either, so that the first LAN mode setting unit 504 sets the working mode of the port to a LAN mode. The first predetermined time starts when the routing device initiates a first detection message for the first time, and the second predetermined time starts when the routing device initiates a second detection message for the first time, which may be preset in a routing device by a manufacturer or may also be set during the subsequent use of the routing device.

In the embodiment of the present invention, the routing device first detects through a DHCP discover message whether an HCP server exists at the other end of the port, and if a DHCP offer message is received within a first predetermined time, it may be regarded that the other end of the port is connected to a DHCP server, the working mode of the port is set to a WAN mode, and the IP address in the DHCP offer is configured to the port, so that the routing device is capable of accessing a wide area Ethernet through the port that works in a WAN mode. If the DHCP offer message is not received within the first predetermined time, it is further detected whether a PPPoE server exists at the other end of the port through a PADI message, and if a PADO message is received within a second predetermined time, it may be regarded that the other end of the port is connected to a PPPoE server, the working mode of the port is set to a WAN mode, a PPPoE session is established in response to the PADO message, and a PPPoE dial-up connection request is initiated to a PPPoE server, so that the routing device is capable of accessing a wide area Ethernet through the port that works in a WAN mode. If the PADO message is not received within the second predetermined time, it may be regarded that the other end of the port is not connected to a PPPoE server or a DHCP server, and the working mode of the port is set to a LAN mode. Through the foregoing solution, the routing device is capable of automatically setting the working mode of the port to a WAN mode or a LAN mode, and works normally, and because a user is not required to perform the setting, the process of setting the working mode of a port is simplified.

Optionally, in this embodiment, the first detection unit 501 may also be a PPPoE client unit, the first detection message may be a PADI message, the first response message may be a PADO message, the second detection unit 503 may be a DHCP client unit, the second detection message may be a DHCP discover message, and the second response message may be a DHCP offer message. The routing device may also detect, through a PADI message, whether a PPPoE server exists at the other end of the port, if it is regarded that a PPPoE server is not provided, detect, through a DHCP discover message, whether an HCP server exists at the other end of the port, which is also capable to achieve the beneficial effect of simplifying the process of setting the working mode of a port.

Referring to FIG. 9, an embodiment of the present invention further provides another routing device, which includes a port. and further includes the following structures:
a third detection unit 601, configured to initiate a first detection message and a second detection message through the port at the same time;
where the first detection message is used for detecting a first network server, and the second detection message is used for detecting a second network server;
a second WAN mode setting unit 602, configured to set a working mode of the port to a WAN mode if at least one of a first response message to the first detection message and a second response message to the second detection message is received within a predetermined time; and
a second LAN mode setting unit 603, configured to set the working mode of the port to a LAN mode if the first response message to the first detection message is not received within a first predetermined time, and the second response message to the second detection message is not received within a second predetermined time.

Specifically, when the port of the routing device is connected to a device or a network through a cable or in other manners or the routing device is powered on or restarted, the third detection unit 601 is triggered to initiate a first detection message and a second detection message. Specifically, the first detection message may be a DHCP discover message, the first response message may be a DHCP offer message; the second detection message may be a PADI message, and the second response message may be a PADO message. The specific process may be referred to other embodiments, which are longer described here. The first predetermined time starts when the routing device initiates a first detection message, and the second predetermined time starts when the routing device initiates a second detection message, which may be the same predetermined time, and may be preset in a routing device by a manufacturer or may also be set during the subsequent use of the routing device.

In the embodiment of the present invention, the third detection unit 601 is capable of sending a DHCP discover message and a PADI message through a port at the same time, detecting whether the other end of the port is connected to a DHCP server or a PPPoE server, or initiating a DHCP discover message and a PADI message in a sequence through the port, where if the DHCP discover message is initiated first, the time interval between the initiation of the PADI message and the initiation of the DHCP discover message is shorter than the first predetermined time; and if the PADI message is initiated first, the time interval between the initiation of the DHCP discover message and the initiation of the PADI message is shorter than the second predetermined time.

Optionally, if the third detection unit 601 does not receive the PADO message when receiving the DHCP offer message within the first predetermined time, the second LAN mode setting unit 603 allocates the IP address in the DHCP offer message to the port, establishes a DHCP session with a DHCP server that sends the DHCP offer message, and sets the working mode of the port to a WAN mode; and if the third detection unit 601 does not receive the DHCP offer message when receiving the PADO message within the second predetermined time, the second LAN mode setting unit 603 establishes a PPPoE session with a PPPoE server that sends the PADO message, and sets the working mode of the port to a WAN mode.

If the routing device receives neither the DHCP offer message nor the PADO message, the second LAN mode setting unit 603 sets the working mode of the port to a LAN mode. Through the foregoing solution, the time delay for detecting a server at another side of a port can be reduced, so as to complete the setting of the working mode of the port more rapidly.

In the above solution, in some application scenarios, the routing device might receive both the DHCP offer message and the PADI message, and the system architecture in the application scenario is shown in FIG. 6. A routing device A is connected to a device B set with a DHCP server through a port, the device B is connected to a network set with a PPPoE server, and the device B is further connected to other access devices, in which the device B establishes a PPoE connection with the PPPoE server and accesses a wide area network, and other access devices access the wide area network through the device B. In such an application scenario, when the routing device A initiates a DHCP discover message and a PADI message, both a DHCP server and a PPPoE server are provided in the network that the routing device A accesses through a port, and because of network interconnectivity, after initiating the DHCP discover message and the PADI message, the routing device A might receive both the DHCP offer message and the PADO message. For example, the routing device A establishes a connection with the PPPoE server in response to the PADO message, and sends a PPPoE dial-up request to the PPPoE server, so that as a PPPoE connection is established between the device B and the PPPoE server, the PPPoE connection between the device B and the PPPoE server might become unstable. In such an application scenario, the routing device A is expected to be capable of establishing a connection with the DHCP server and allocating the IP address allocated by the DHCP server to the port. Therefore, optionally, the priority may be that the second WAN mode setting unit 602 in this embodiment makes response to the DHCP discover message and configures a port parameter according to the DHCP discover message. Specifically, if the DHCP offer message is not received when a PADO message is received within a second predetermined time, keep waiting; if the DHCP offer message is then received within the first predetermined time, allocate the IP address in the DHCP offer message to the port according to the DHCP offer message, establish a DHCP session with a DHCP server that sends the DHCP offer message, and set the working mode of the port to a WAN mode; and if a DHCP offer message is not received within a first predetermined time, and according to the PADO message, establish a PPPoE session with a PPPoE server that sends the PADO message, and set the working mode of the port to a WAN mode.

If the PADO message is not received when a DHCP offer message is received within a first predetermined time,
allocate the IP address in the DHCP offer message to the port according to the DHCP offer message, establish a DHCP session with a DHCP server that sends the DHCP offer message, set the working mode of the port to a WAN mode, and if the PADO message then is received, make no response to the PADO message.

The specific determination process of the second WAN mode setting unit 602 in the application scenario may also be referred to FIG. 7 and the foregoing method embodiments, which is longer described here.

Through the execution of the foregoing process by the second WAN mode setting unit 602, in the application scenario shown in FIG. 6, the routing device may be normally connected to a DHCP server and keeping the connection between the DHCP server device and the PPPoE server stable.

It should be noted that, in the embodiments of the present invention, the detection messages, namely, the first detection message and the second detection message are not limited to a DHCP discover message and a PADI message, and instead a network message, as long as may be used for detecting a server on a wide area network side, may be used in the present invention. In the embodiment of the present invention, the DHCP discover message and the PADI message are taken as an example for illustration, which does not constitute a limitation on the present invention.

It should be noted that, in the embodiment of the present invention, the detection units and the setting units may be implemented by separate hardware modules or one integrated microprocessor or a functional module integrated into a main chip.

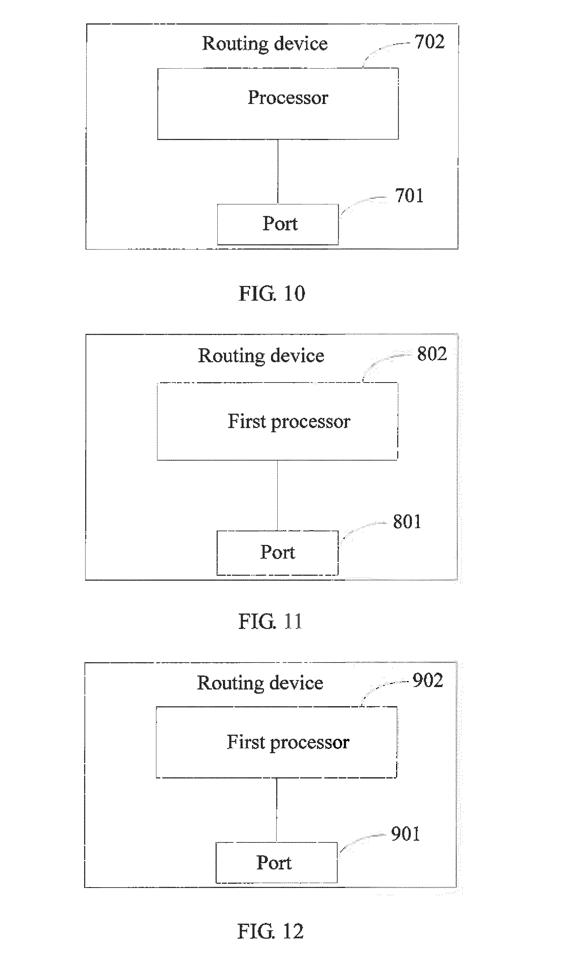

Referring to FIG. 10, an embodiment of the present invention further provides a routing device, which includes the following structures:
a port 701;
a processor 702, configured to initiate a detection message through the port 701, where the detection message is used for detecting a network server; set a working mode of the port 701 to a WAN mode if a response message to the detection message is received within a predetermined time; and set the working mode of the port 701 to a LAN mode if the response message to the detection message is not received within the predetermined time.

Optionally, the detection message is a DHCP discover message, and the response message to the detection message is a DHCP offer message. Alternatively, the detection message is a PADI message, and the response message to the detection message is a PADO message. Different detection messages may be applied in different use scenarios, and the present invention is not limited thereto. The rest specific operation process is similar to other embodiments, which may be referred to other embodiments and are longer described here.

In the embodiment of the present invention, the processor 702 is capable of detecting, through a detection message, whether a server exists at the other end of the port 701. If a response message is received within a predetermined time, it may be regarded that the other end of the port 701 is connected to a server, and the processor 702 sets the working mode of the port 701 to a WAN mode, so that the routing device is capable of accessing a wide area Ethernet through the port 701 that works in a WAN mode. If a response message is not received within a predetermined time, it may be regarded that the other end of the port 701 is not connected to a server, and the processor 702 sets the working mode of the port 701 to a LAN mode. Through the foregoing solution, the routing device is capable of automatically setting the working mode of the port to a WAN mode or a LAN mode, and works normally, and because a user is not required to perform the setting, the process of setting the working mode of a port is simplified.

Referring to FIG. 11, an embodiment of the present invention further provides a routing device, which includes the following structures:
a port 801;
a first processor 802, configured to initiate a first detection message through the port 801, where the first detection message is used for detecting a first network server; set a working mode of the port 801 to a WAN mode if a first response message to the first detection message is received within a first predetermined time; initiate a second detection message through the port 801 if the first response message to the first detection message is not received within the first predetermined time, where the second detection message is used for detecting a second network server; set the working mode of the port 801 to a WAN mode if a second response message to the second detection message is received within a second predetermined time; and set working mode of the port 801 to a LAN mode if the second response message is not received within the second predetermined time.

Optionally, in an embodiment of the present invention, the first detection message may be a DHCP discover message, the first response message may be a DHCP offer message, the second detection message may be a PADI message, and the second response message may be a PADO message. The first detection message may be a PADI message, the first response message may be a PADO message, the second detection message may be a DHCP discover message, and the second response message may be a DHCP offer message. The first processor 802 is capable of sending the DHCP discover message and the PADI message a plurality of times, so as to prevent a failure of sending the DHCP discover message and the PADI message due to packet loss or undesirable network conditions, and the like. The specific process may be referred to other embodiments, which are longer described here. It should be noted that the working mode of the port may be set immediately after the DHCP offer message or the PADO message is received or may be set after the first predetermined time and the second predetermined time have ended, which is not limited in all embodiments of the present invention.

In the embodiment of the present invention, the first processor 802 is capable of detecting, through a first detection message, whether a server exists at the other end of the port 801; and if it is regarded that a first server is not provided, further detecting, through a second detection message, whether a second server exists at the other end of the port. If it is regarded that a first server or a second server exists, the first processor 802 sets the working mode of the port 801 to a WAN mode, or otherwise sets the working mode of the port 801 to a LAN mode, so as to achieve the beneficial effect of simplifying the process of setting the working mode of a port.

Referring to FIG. 12, an embodiment of the present invention further provides a routing device, which includes the following structures:
a port 901;
a second processor 902, configured to initiate a first detection message and a second detection message through the port 901 at the same time, where the first detection message is used for detecting a first network server, and the second detection message is used for detecting a second network server; set a working mode of the port 901 to a WAN mode if at least one of a first response message to the first detection message and a second response message to the second detection message is received within a predetermined time; and set the working mode of the port 901 to a LAN mode if the first response message to the first detection message is not received within a first predetermined time and the second response message to the second detection message is not received within a second predetermined time.

Specifically, the first detection message may be a DHCP discover message, the first response message may be a DHCP offer message; the second detection message may be a PADI message, and the second response message may be a PADO message. The specific process may be referred to other embodiments, which are longer described here.

In the embodiment of the present invention, the second processor 902 is capable of sending the DHCP discover message and the PADI message through the port at the same time to detect whether the other end of the port is connected to a DHCP server or a PPPoE server, and is also capable of initiating a DHCP discover message and a PADI message in a sequence through the port 901, in which if the DHCP discover message is initiated first, the time interval between the initiation of the PADI message and the initiation of the DHCP discover message is shorter than the first predetermined time; and if the PADI message is initiated first, the time interval between the initiation of the DHCP discover message and the initiation of the PADI message is shorter than the second predetermined time.

Optionally, if the second processor 902 does not receive the PADO message when receiving the DHCP offer message within the first predetermined time, the second processor 902 allocates the IP address in the DHCP offer message to the port according to the DHCP offer message, establishes a DHCP session with a DHCP server that sends the DHCP offer message, and sets the working mode of the port to a WAN mode; and if the second processor 902 does not receive the DHCP offer message when receiving the PADO message within the second predetermined time, the second processor 902 establishes a PPPoE session with a PPPoE server that sends the PADO message according to the PADO message and sets the working mode of the port to a WAN mode.

If the second processor 902 receives neither the DHCP offer message nor the PADO message, the second processor 902 sets the working mode of the port to a LAN mode. Through the foregoing solution, the time delay for detecting a server at the other side of the port may be reduced, so as to complete the setting of the working mode of the port more rapidly.

In the above solution, in some application scenarios, the routing device might receive both the DHCP offer message and the PADI message, and the system architecture in the application scenario is shown in FIG 6. A routing device A is connected to a device B set with a DHCP server through a port, the device B is connected to a network set with a PPPoE server, and the device B is further connected to other access devices, in which the device B establishes a PPoE connection with the PPPoE server and accesses a wide area network, and other access devices access the wide area network through the device B. In such an application scenario, when the routing device A initiates a DHCP discover message and a PADI message, both a DHCP server and a PPPoE server are provided in the network that the routing device A accesses through a port, and because of network interconnectivity, after step 301 is performed, the routing device A might receive both the DHCP offer message and the PADO message. For example, the routing device A sends a PPPoE dial-up request to the PPPoE server in response to the PADO message, so that as a PPPoE connection is established between the device B and the PPPoE server, the PPPoE connection between the device B and the PPPoE server might become unstable. In such an application scenario, the routing device A is expected to be capable of establishing a connection with the DHCP server, and allocating the IP address allocated by the DHCP server to the port. Therefore, optionally, the priority may be that the second processor 902 makes a response to the DHCP discover message and configures a port parameter according to the DHCP discover message, which is specifically as follows:

If the DHCP offer message is not received when a PADO message is received within a second predetermined time, keep waiting; if the DHCP offer message is then received within the first predetermined time, allocate the IP address in the DHCP offer message to the port according to the DHCP offer message, establish a DHCP session with a DHCP server that sends the DHCP offer message, and set the working mode of the port to a WAN mode; and if a DHCP offer message is not received within a first predetermined time, establish a PPPoE session with a PPPoE server that sends the PADO message according to the PADO message and set the working mode of the port to a WAN mode.

If the PADO message is not received when a DHCP offer message is received within a first predetermined time,
allocate the IP address in the DHCP offer message to the port according to the DHCP offer message, establish a DHCP session with a DHCP server that sends the DHCP offer message, set the working mode of the port to a WAN mode, and if subsequently the PADO message is received, make no response to the PADO message.

The specific determination process that the second processor 902 in the application scenario is referred to FIG. 7 and the foregoing method embodiments, which is longer described here.

Through the execution of the foregoing process by the second processor 902, in the application scenario shown in FIG. 6, the routing device may be normally connected to a DHCP server and keeping the connection between the DHCP server device and the PPPoE server stable.

It should be noted that, in the embodiment of the present invention, the detection units and the setting units may be implemented by separate hardware modules or one integrated microprocessor or a functional module integrated into a main chip.

An embodiment of the present invention further provides a computer program product, which includes a readable storage medium for use by a routing device, where a program code is stored in the readable storage medium, and the program code includes:
an instruction for initiating a first detection message and a second detection message at the same time through a port, where the first detection message is used for detecting a first network server, and the second detection message is used for detecting a second network server,
an instruction for setting a working mode of the port to a wide area network WAN mode if at least one of a first response message to the first detection message and a second response message to the second detection message is received within a predetermined time; and
an instruction for setting the working mode of the port to a local area network LAN mode if the first response message to the first detection message is not received within the predetermined time and the second response message to the second detection message is not received within the predetermined time.

Optionally, the first detection message is a dynamic host configuration protocol DHCP discover message, the first response message is a DHCP offer message; the second detection message is a Point-to-Point Protocol over Ethernet PADI message, and the second response message is a PADO message.

Optionally, the instruction for setting the working mode of the port to a wide area network WAN mode if at least one of a first response message to the first detection message and a second response message to the second detection message is received within a predetermined time is specifically:
an instruction for, if the PADO message is not received when the DHCP offer message is received within the predetermined time, allocating the IP address in the DHCP offer message to the port according to the DHCP offer message, establishing a DHCP session with a DHCP server that sends the DHCP offer message, and setting the working mode of the port to a WAN mode; and
an instruction for, if the DHCP offer message is not received when the PADO message is received within the predetermined time,
according to the PADO message, establishing a PPPoE session with a PPPoE server that sends the PADO message, and setting the working mode of the port to a WAN mode.

Optionally, the instruction for, if at least one of a first response message to the first detection message and a second response message to the second detection message is received within a predetermined time, setting the working mode of the port to a wide area network WAN mode is specifically:
an instruction for, if the DHCP offer message is not received when the PADO message is received within the predetermined time, keeping waiting; an instruction for, if the DHCP offer message is then received within the predetermined time, allocating the IP address in the DHCP offer message to the port according to the DHCP offer message, establishing a DHCP session with a DHCP server that sends the DHCP offer message, and setting the working mode of the port to a WAN mode; and an instruction for, if the DHCP offer message is not received within the predetermined time, and according to the PADO message, establishing a PPPoE session with a PPPoE server that sends the PADO message, and setting the working mode of the port to a WAN mode; and
an instruction for, if the PADO message is not received when the DHCP offer message is received within the predetermined time,
allocating the IP address in the DHCP offer message to the port according to the DHCP offer message, establishing a DHCP session with a DHCP server that sends the DHCP offer message, and setting the working mode of the port to a WAN mode.

The specific implementation process described in the foregoing is the same as those in the foregoing embodiments, which is no longer described here.

An embodiment of the present invention further provides another computer program product, which includes a readable storage medium for use by a routing device, where a program code is stored in the readable storage medium, and the program code includes:
an instruction for initiating a first detection message through a port, where the first detection message is used for detecting a first network server;
an instruction for setting a working mode of the port to a wide area network WAN mode if a first response message to the first detection message is received within a first predetermined time;
an instruction for, if the first response message to the first detection message is not received within the first predetermined time, initiating a second detection message through the port, where the second detection message is used for detecting a second network server;
an instruction for, if a second response message to the second detection message is received within a second predetermined time, setting the working mode of the port to a WAN mode; and
an instruction for, if the second response message to the second detection message is not received within the second predetermined time, setting the working mode of the port to a local area network LAN mode.

Optionally, the first detection message is a dynamic host configuration protocol DHCP discover message, the first response message is a DHCP offer message; the second detection message is a Point-to-Point Protocol over Ethernet PADI message, and the second response message is a PADO message.

Specifically, the instruction for setting the working mode of the port to a WAN mode if the DHCP offer message is received within the first predetermined time is specifically:
an instruction for allocating the IP address in the DHCP offer message to the port, establishing a DHCP session with a DHCP server that sends the DHCP offer message, and setting the working mode of the port to a WAN mode.

Specifically, the instruction for setting the working mode of the port to a WAN mode if the PADO message is received within the second predetermined time is specifically:
an instruction for establishing a PPPoE session with a PPPoE server that sends the PADO message, and setting the working mode of the port to a WAN mode.

The specific implementation process described in the foregoing is the same as those in the foregoing embodiments, which is no longer described here.

In the foregoing embodiments, the description of each of the embodiments has respective focuses. For a part that is not described in detail in a certain embodiment, reference may be made to related descriptions in other embodiments.

Persons skilled in the art may understand that an accompanying drawing is only a schematic diagram of an exemplary embodiment, modules, entities or processes in the accompanying drawings are not mandatory to implement the present invention.

Persons skilled in the art is able to understand that: the modules or entities of the terminals in the embodiment may be distributed in the terminal in the embodiment according to the description of the embodiment, or be changed and located in one or multiple devices different from the device in the present embodiment. The modules or entities in the foregoing embodiment may be combined into one module or entity, or further split into multiple sub modules or entities. In the several embodiments provided in the present application, it should be understood that the disclosed device and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical or other forms.

Based on the foregoing description of the embodiments, persons skilled in the art may be fully aware that the present invention may be implemented using software plus necessary generic hardware platform, and definitely may also be implemented by using hardware, but in most cases, the present invention is preferably implemented by using the former method. Based on such an understanding, the technical solutions of the present invention essentially, or the part contributing to the prior art may be implemented in the form of a software product. The computer software product is stored in a readable storage medium, for example, a floppy disk, hard disk, or optical disk of the computer, and includes several instructions for instructing a computer device (which may be a personal computer, a server, or a network device) to perform the methods described in the embodiments of the present invention.

The foregoing embodiments are only provided for describing the technical solutions of the present invention, but are not intended to limit the present invention. It should be understood by persons skilled in the art that although the present invention are described in detail with reference to the foregoing embodiments, modifications may be made to the technical solutions described in each of the embodiments, or equivalent replacements may be made to some technical features in the technical solutions, as long as such modifications or replacements do not cause the essence of corresponding technical solutions to depart from the spirit and scope of the technical solutions in each of the embodiments of the present invention.

## Claims

1. A port setting method, comprising:
initiating a first detection message and a second detection message at the same time through a port, wherein the first detection message is used for detecting a first network server, and the second detection message is used for detecting a second network server;
setting a working mode of the port to a wide area network WAN mode if at least one of a first response message to the first detection message and a second response message to the second detection message is received within a predetermined time; and
setting the working mode of the port to a local area network LAN mode if the first response message to the first detection message is not received within the predetermined time and the second response message to the second detection message is not received within the predetermined time.

2. The method according to claim 1, wherein the first detection message is a dynamic host configuration protocol DHCP discover message, the first response message is a DHCP offer message; the second detection message is a Point-to-Point Protocol over Ethernet Active Discovery Initiation PADI message, and the second response message is a Point-to-Point Protocol over Ethernet Active Discover Offer PADO message.

3. The method according to claim 2, wherein the setting the working mode of the port to a wide area network WAN mode if at least one of a first response message to the first detection message and a second response message to the second detection message is received within a predetermined time is specifically:
if the PADO message is not received when the DHCP offer message is received within the predetermined time,
allocating an IP address in the DHCP offer message to the port according to the DHCP offer message, establishing a DHCP session with a DHCP server that sends the DHCP offer message, and setting the working mode of the port to a WAN mode;
if the DHCP offer message is not received when the PADO message is received within the predetermined time,
according to the PADO message, establishing a PPPoE session with a PPPoE server that sends the PADO message, and setting the working mode of the port to a WAN mode.

4. The method according to claim 2, wherein the setting the working mode of the port to a wide area network WAN mode if at least one of a first response message to the first detection message and a second response message to the second detection message is received within a predetermined time is specifically:
if the DHCP offer message is not received when the PADO message is received within the predetermined time, keeping waiting; if the DHCP offer message is then received within the predetermined time, allocating an IP address in the DHCP offer message to the port according to the DHCP offer message, establishing a DHCP session with a DHCP server that sends the DHCP offer message, and setting the working mode of the port to a WAN mode; and if the DHCP offer message is not received within the predetermined time, and according to the PADO message, establishing a PPPoE session with a PPPoE server that sends the PADO message, and setting the working mode of the port to a WAN mode;
if the PADO message is not received when the DHCP offer message is received within the predetermined time,
allocating the IP address in the DHCP offer message to the port according to the DHCP offer message, establishing a DHCP session with a DHCP server that sends the DHCP offer message, and setting the working mode of the port to a WAN mode.

5. A port setting method, comprising:
initiating a first detection message through a port, wherein the first detection message is used for detecting a first network server;
setting a working mode of the port to a wide area network WAN mode if a first response message to the first detection message is received within a first predetermined time;
initiating a second detection message through the port if the first response message to the first detection message is not received within the first predetermined time, wherein the second detection message is used for detecting a second network server;
setting the working mode of the port to a WAN mode if a second response message to the second detection message is received within a second predetermined time; and
setting the working mode of the port to a local area network LAN mode if the second response message to the second detection message is not received within the second predetermined time.

6. The method according to claim 5, wherein the first detection message is a dynamic host configuration protocol DHCP discover message, the first response message is a DHCP offer message; the second detection message is a Point-to-Point Protocol over Ethernet Active Discovery Initiation PADI message, and the second response message is a Point-to-Point Protocol over Ethernet Active Discover Offer PADO message.

7. The method according to claim 6, wherein,
the setting the working mode of the port to a WAN mode if the DHCP offer message is received within the first predetermined time is specifically:
allocating an IP address in the DHCP offer message to the port, establishing a DHCP session with a DHCP server that sends the DHCP offer message, and setting the working mode of the port to a WAN mode; and
the setting the working mode of the port to a WAN mode if the PADO message is received within the second predetermined time is specifically:
establishing a PPPoE session with a PPPoE server that sends the PADO message, and setting the working mode of the port to a WAN mode.

8. A routing device, comprising a port, and further comprising the following structure:
a third detection unit, configured to initiate a first detection message and a second detection message through the port at the same time, wherein the first detection message is used for detecting a first network server, and the second detection message is used for detecting a second network server;
a second WAN mode setting unit, configured to set a working mode of the port to a wide area network WAN mode if at least one of a first response message to the first detection message and a second response message to the second detection message is received within a predetermined time; and
a second LAN mode setting unit, configured to set the working mode of the port to a local area network LAN mode if the first response message to the first detection message is not received within the predetermined time and the second response message to the second detection message is not received within a predetermined time.

9. The routing device according to claim 8, wherein the first detection message is a dynamic host configuration protocol DHCP discover message, the first response message is a DHCP offer message; the second detection message is a Point-to-Point Protocol over Ethernet Active Discovery Initiation PADI message, and the second response message is a Point-to-Point Protocol over Ethernet Active Discover Offer PADO message.

10. The routing device according to claim 9, wherein the second WAN mode setting unit is specifically configured to:
if the PADO message is not received when the DHCP offer message is received within the predetermined time,
allocate an IP address in the DHCP offer message to the port according to the DHCP offer message, establish a DHCP session with a DHCP server that sends the DHCP offer message, and set the working mode of the port to a WAN mode; and
if the DHCP offer message is not received when the PADO message is received within the predetermined time,
according to the PADO message, establish a PPPoE session with a PPPoE server that sends the PADO message, and set the working mode of the port to a WAN mode.

11. The routing device according to claim 9, wherein the second WAN mode setting unit is specifically configured to:
if the DHCP offer message is not received when the PADO message is received within the predetermined time, keep waiting; if the DHCP offer message is then received within the predetermined time, allocate an IP address in the DHCP offer message to the port according to the DHCP offer message, establish a DHCP session with a DHCP server that sends the DHCP offer message, and set the working mode of the port to a WAN mode; and if the DHCP offer message is not received within the predetermined time, and according to the PADO message, establish a PPPoE session with a PPPoE server that sends the PADO message and set the working mode of the port to a WAN mode; and
if the PADO message is not received when the DHCP offer message is received within the predetermined time,
allocate the IP address in the DHCP offer message to the port according to the DHCP offer message, establish a DHCP session with a DHCP server that sends the DHCP offer message, and set the working mode of the port to a WAN mode.

12. A routing device, comprising a port, and further comprising:
a first detection unit, configured to initiate a first detection message through the port, wherein the first detection message is used for detecting a first network server;
a first WAN mode setting unit, configured to set a working mode of the port to a wide area network WAN mode if a first response message to the first detection message is received within a first predetermined time;
a second detection unit, configured to initiate a second detection message through the port if the first response message to the first detection message is not received within the first predetermined time, wherein the second detection message is used for detecting a second network server;
wherein the first WAN mode setting unit is further configured to set the working mode of the port to a WAN mode if a second response message to the second detection message is received within a second predetermined time; and
a first LAN mode setting unit 504, configured to set the working mode of the port to a wide area network LAN mode if the second response message to the second detection message is not received within the second predetermined time.

13. The routing device according to claim 12, wherein the first detection unit is a dynamic host configuration protocol DHCP Client unit, the first detection message is a DHCP discover message, the first response message is a DHCP offer message; the second detection unit is a Point-to-Point Protocol over Ethernet PPPoE Client unit, the second detection message is a Point-to-Point Protocol over Ethernet Active Discovery Initiation PADI message, and the second response message is a Point-to-Point Protocol over Ethernet Active Discover Offer PADO message.

14. The routing device according to claim 13, wherein the first WAN mode setting unit is specifically configured to:
if the DHCP offer message is received within the first predetermined time, allocate the IP address in the DHCP offer message to the port, establish a DHCP session with a DHCP server that sends the DHCP offer message, and set the working mode of the port to a WAN mode; and
if the PADO message is received within the second predetermined time, establish a PPPoE session with a PPPoE server that sends the PADO message, and set the working mode of the port to a WAN mode.

15. A routing device, comprising:
a port;
a second processor, configured to initiate a first detection message and a second detection message at the same time through a port, wherein the first detection message is used for detecting a first network server, and the second detection message is used for detecting a second network server; if at least one of a first response message to the first detection message and a second response message to the second detection message is received within a predetermined time, set a working mode of the port to a WAN mode; and if the first response message to the first detection message is not received within the predetermined time and the second response message to the second detection message is not received within the predetermined time, set the working mode of the port to a LAN mode.

16. The routing device according to claim 15, wherein the first detection message is a dynamic host configuration protocol DHCP discover message, the first response message is a DHCP offer message; the second detection message is a Point-to-Point Protocol over Ethernet Active Discovery Initiation PADI message, and the second response message is a Point-to-Point Protocol over Ethernet Active Discover Offer PADO message.

17. The routing device according to claim 16, wherein the second processor is specifically configured to:
if the PADO message is not received when the DHCP offer message is received within the predetermined time,
allocate an IP address in the DHCP offer message to the port according to the DHCP offer message, establish a DHCP session with a DHCP server that sends the DHCP offer message, and set the working mode of the port to a WAN mode; and
if the DHCP offer message is not received when the PADO message is received within the predetermined time,
according to the PADO message, establish a PPPoE session with a PPPoE server that sends the PADO message, and set the working mode of the port to a WAN mode.

18. The routing device according to claim 16, wherein the second processor is specifically configured to:
if the DHCP offer message is not received when the PADO message is received within the predetermined time, keep waiting; if the DHCP offer message is then received within the predetermined time, allocate an IP address in the DHCP offer message to the port according to the DHCP offer message, establish a DHCP session with a DHCP server that sends the DHCP offer message, and set the working mode of the port to a WAN mode; and if the DHCP offer message is not received within the predetermined time, and according to the PADO message, establish a PPPoE session with a PPPoE server that sends the PADO message, and set the working mode of the port to a WAN mode; and
if the PADO message is not received when the DHCP offer message is received within the predetermined time,
allocate the IP address in the DHCP offer message to the port according to the DHCP offer message, establish a DHCP session with a DHCP server that sends the DHCP offer message, and set the working mode of the port to a WAN mode.

19. A routing device, comprising:
a port;
a first processor, configured to initiate a first detection message through the port, wherein the first detection message is used for detecting a first network server; if a first response message to the first detection message is received within a first predetermined time, set a working mode of the port to a WAN mode; if a first response message to the first detection message is not received within a first predetermined time, initiate a second detection message through the port, wherein the second detection message is used for detecting a second network server; if a second response message to the second detection message is received within a second predetermined time, set the working mode of the port to a WAN mode; and if the second response message is not received within the second predetermined time, set the working mode of the port to a LAN mode.

20. The routing device according to claim 19, wherein the first detection message is a DHCP discover message, the first response message is a DHCP offer message; the second detection message is a Point-to-Point Protocol over Ethernet Active Discovery Initiation PADI message, and the second response message is a Point-to-Point Protocol over Ethernet Active Discover Offer PADO message.

21. The routing device according to claim 20, wherein the first processor is specifically configured to:
if the DHCP offer message is received within the first predetermined time, allocate an IP address in the DHCP offer message to the port, establish a DHCP session with a DHCP server that sends the DHCP offer message, and set the working mode of the port to a WAN mode; and
if the PADO message is received within the second predetermined time, establish a PPPoE session with a PPPoE server that sends the PADO message, and set the working mode of the port to a WAN mode.

22. A computer program product, comprising a readable storage medium for use by a routing device, wherein a program code is stored in the readable storage medium, and the program code comprises:
an instruction for initiating a first detection message and a second detection message at the same time through a port, wherein the first detection message is used for detecting a first network server, and the second detection message is used for detecting a second network server,
an instruction for setting the working mode of the port to a wide area network WAN mode if at least one of a first response message to the first detection message and a second response message to the second detection message is received within a predetermined time;
an instruction for setting the working mode of the port to a local area network LAN mode if a first response message to the first detection message is not received within a predetermined time and a second response message to the second detection message is not received within a predetermined time.

23. The computer program product according to claim 22, wherein the first detection message is a dynamic host configuration protocol DHCP discover message, the first response message is a DHCP offer message; the second detection message is a Point-to-Point Protocol over Ethernet Active Discovery Initiation PADI message, and the second response message is a Point-to-Point Protocol over Ethernet Active Discover Offer PADO message.

24. The computer program product according to claim 23, wherein,
the instruction for setting the working mode of the port to a wide area network WAN mode if at least one of a first response message to the first detection message and a second response message to the second detection message is received within a predetermined time is specifically:
an instruction for, if the PADO message is not received when the DHCP offer message is received within the predetermined time,
allocating an IP address in the DHCP offer message to the port according to the DHCP offer message, establishing a DHCP session with a DHCP server that sends the DHCP offer message, and setting the working mode of the port to a WAN mode; and
an instruction for, if the DHCP offer message is not received when the PADO message is received within the predetermined time,
according to the PADO message, establishing a PPPoE session with a PPPoE server that sends the PADO message, and setting the working mode of the port to a WAN mode.

25. The computer program product according to claim 23, wherein the instruction for setting the working mode of the port to a wide area network WAN mode if at least one of a first response message to the first detection message and a second response message to the second detection message is received within a predetermined time is specifically:
an instruction for, if the DHCP offer message is not received when the PADO message is received within the predetermined time, keeping waiting; an instruction for, if the DHCP offer message is then received within the predetermined time, allocating an IP address in the DHCP offer message to the port according to the DHCP offer message, establishing a DHCP session with a DHCP server that sends the DHCP offer message, and setting the working mode of the port to a WAN mode; and an instruction for, if the DHCP offer message is not received within the predetermined time, and according to the PADO message, establishing a PPPoE session with a PPPoE server that sends the PADO message, and setting the working mode of the port to a WAN mode; and
an instruction for, if the PADO message is not received when the DHCP offer message is received within the predetermined time,
allocating the IP address in the DHCP offer message to the port according to the DHCP offer message, establishing a DHCP session with a DHCP server that sends the DHCP offer message, and setting the working mode of the port to a WAN mode.

26. A computer program product, comprising a readable storage medium for use by a routing device, wherein a program code is stored in the readable storage medium, and the program code comprises:
an instruction for initiating a first detection message through a port, wherein the first detection message is used for detecting a first network server;
an instruction for setting a working mode of the port to a wide area network WAN mode if a first response message to the first detection message is received within a first predetermined time;
an instruction for initiating a second detection message through the port if a first response message to the first detection message is not received within the first predetermined time, wherein the second detection message is used for detecting a second network server;
an instruction for setting the working mode of the port to a WAN mode if a second response message to the second detection message is received within a second predetermined time; and
an instruction for setting the working mode of the port to a local area network LAN mode if a second response message to the second detection message is not received within a second predetermined time.

27. The method according to claim 26, wherein the first detection message is a dynamic host configuration protocol DHCP discover message, the first response message is a DHCP offer message; the second detection message is a Point-to-Point Protocol over Ethernet Active Discovery Initiation PADI message, and the second response message is a Point-to-Point Protocol over Ethernet Active Discover Offer PADO message.

28. The method according to claim 27, wherein,
the instruction for setting the working mode of the port to a WAN mode if the DHCP offer message is received within the first predetermined time is specifically:
an instruction for allocating an IP address in the DHCP offer message to the port, establishing a DHCP session with a DHCP server that sends the DHCP offer message, and setting the working mode of the port to a WAN mode; and
the instruction for setting the working mode of the port to a WAN mode if the PADO message is received within the second predetermined time is specifically:
an instruction for establishing a PPPoE session with a PPPoE server that sends the PADO message, and setting the working mode of the port to a WAN mode.
